# FASCICULE DE BREVET EUROPEEN

(11) **EP 0 713 668 B1**
(45) Date de publication et mention de la délivrance du brevet: **13.08.1997**
(21) Numéro de dépôt: 95420304.8
(22) Date de dépôt: 02.11.1995
(51) Int. Cl.: A47J 37/06

(54) **Appareil de cuisson du type gril à gaz**
Kochgerät von Gas-Grill Typ
Cooking appliance of the gas grill type

(30) Priorité: 18.11.1994 FR 9414051
(43) Date de publication de la demande: 29.05.1996
(73) Titulaire: APPLICATION DES GAZ, F-75012 Paris (FR)
(72) Inventeur: Nouvelot, David, F-69008 Lyon (FR); Thibault, Jean-Jacques, F-69005 Lyon (FR)
(74) Mandataire: Guerre, Dominique

(56) Documents cités:
- EP-A- 0 212 750
- EP-A- 0 443 347
- WO-A-87/05197
- GB-A- 2 269 311
- US-A- 2 945 767
- US-A- 3 757 765

## Description

La présente invention concerne un appareil de cuisson du type gril à gaz.

Conformément au document **US-A-2,945,767**, on a déjà décrit et proposé un gril de type professionnel ou industriel voir le préambule de la revendication 1, comprenant :
- un châssis caréné, délimitant un puits de cuisson, ce dernier constituant une enceinte substantiellement fermée,
- deux brûleurs à gaz radiants, supportés par le châssis, de chaque côté du puits de cuisson, présentant chacun une surface rayonnante émettant des infra-rouges et perméable aux fumées de combustion ; chaque surface rayonnante est adjacente au puits de combustion et est orientée verticalement ou présente une composante verticale par rapport à la direction générale du puits de cuisson,
- un récipient de recueil, monté sur le châssis, transversalement dans l'ouverture inférieure du puits de cuisson, servant à recueillir les jus de cuisson
- un fond, en forme de gouttière fermant le puits de cuisson, disposé de manière démontable dans ce dernier, et situé à la fois au-dessous de la surface rayonnante des deux brûleurs radiants et au-dessus du récipient de recueil ; selon la majeure partie de sa surface, ce fond a conjointement un caractère réfractaire vis-à-vis des températures développées en fonctionnement par le brûleur à gaz radiant, des propriétés d'isolation ou séparation thermique des récipients de recueil vis-à-vis de la surface rayonnante des brûleurs radiants, et une perméabilité relative, vis-à-vis des liquides s'écoulant vers le récipient de recueil, et vis-à-vis des vapeurs remontant dudit récipient.

Par une relative étanchéité du puits de cuisson vis-à-vis de l'extérieur, par l'utilisation du récipient de recueil comme moyen d'étanchéité grâce au niveau du liquide dans celui-ci, et par l'évacuation des fumées de combustion à la partie supérieure du puits de cuisson par un orifice calibré, il est possible selon cette solution, précédemment proposée, d'une part de maintenir l'intérieur du puits de cuisson en surpression par rapport à l'extérieur, et d'autre part, d'obtenir une atmosphère relativement appauvrie en oxygène dans ce même puits pendant la combustion, en évitant ainsi toute inflammation des graisses au contact de la pièce de viande en cours de cuisson.

Par ailleurs, toujours selon le même document, la pièce de viande à griller est disposée verticalement, au sein et au milieu du puits de cuisson, au moyen d'un dispositif approprié pouvant être introduit et extrait verticalement dudit puits, en s'ouvrant à l'extérieur de ce dernier, pour libérer la pièce de viande grillée.

Dans le cadre d'un appareil, à cuisson horizontale, et ayant l'aspect et toutes les fonctions d'un "barbecue", la présente invention a pour objet des modalités de construction permettant tout à la fois, et un bon rendement de cuisson et une homogénéité correcte de cette dernière dans le plan horizontal de cuisson, ceci en préservant une cuisson saine, c'est-à-dire sans flammes ou fumées cancérigènes, et savoureuse, c'est-à-dire utilisant principalement un rayonnement thermique à relativement haute température comme mode de cuisson.

Conformément à la présente invention, en combinaison, d'une part le puits de cuisson présente une ouverture supérieure occupée principalement par une grille de cuisson transversale, et d'autre part le fond présente une surface apparente adaptée à celle de la grille de cuisson, en vis-à-vis de cette dernière, et sans obstacle important formant écran dans le puits de cuisson, entre ledit fond et ladite grille de cuisson.

Grâce aux modalités constructives définies précédemment, il devient aussi possible d'évaporer en partie les jus de cuisson présents dans le récipient de recueil ou arrêtés par le fond, sans les détruire par combustion, et d'imprégner la pièce de viande en cours de cuisson avec ces mêmes jus évaporés, sur pratiquement toute sur sa surface, ce qui concourt au caractère savoureux de la pièce grillée ainsi obtenue. Par ailleurs, ces mêmes dispositions constructives permettent, sans complication particulière, de limiter la température du fond, par exemple la maintenir dans une fourchette de température comprise entre 100 et 400°C, et préférentiellement entre 100 et 250°C, et ceci pour éviter toute pyrolyse ou inflammation des graisses dans le puits de cuisson, et préserver l'hygiène de la cuisson.

Par "brûleur à gaz radiant", on entend tout brûleur émettant un rayonnement infra-rouge, qu'il s'agisse d'un brûleur constitué par une structure réfractaire (grille métallique ou céramique en plaque), portée à l'incandescense par des flammes de combustion, ou qu'il s'agisse d'un brûleur catalytique à air induit, c'est à dire brûlant directement un mélange gaz combustible/air comburant.

Un appareil selon l'invention présente encore les avantages suivants :
- dans le récipient de recueil, il devient possible de récupérer les jus ou graisses, lesquels ne se trouvent pas altérés par une chaleur ou des températures excessives, ce qui permet de les consommer en même temps que l'aliment cuit sur la grille de cuisson
- grâce aux propriétés réfractaires du fond, il devient possible de restituer de la chaleur par rayonnement et convection vers les aliments à cuire, dans une proportion estimée par exemple à 15 à 25% du total de la chaleur générée par le ou les brûleurs à gaz radiants
- le fond et le récipient de recueil n'atteignent jamais des températures susceptibles d'entraîner la formation de flammes, par exemple par inflammation des graisses présentes dans ledit récipient.

La présente invention est maintenant décrite par référence au dessin annexé, dans lequel :
- la figure 1 représente une vue en perspective d'un appareil de cuisson selon l'invention avec différents arrachements partiels,
- la figure 2 représente une vue en coupe verticale et transversale de l'appareil de cuisson représenté à la figure 1 ;
- la figure 3 représente, schématiquement le positionnement du fond dans le puits de cuisson d'un appareil conforme à l'invention.

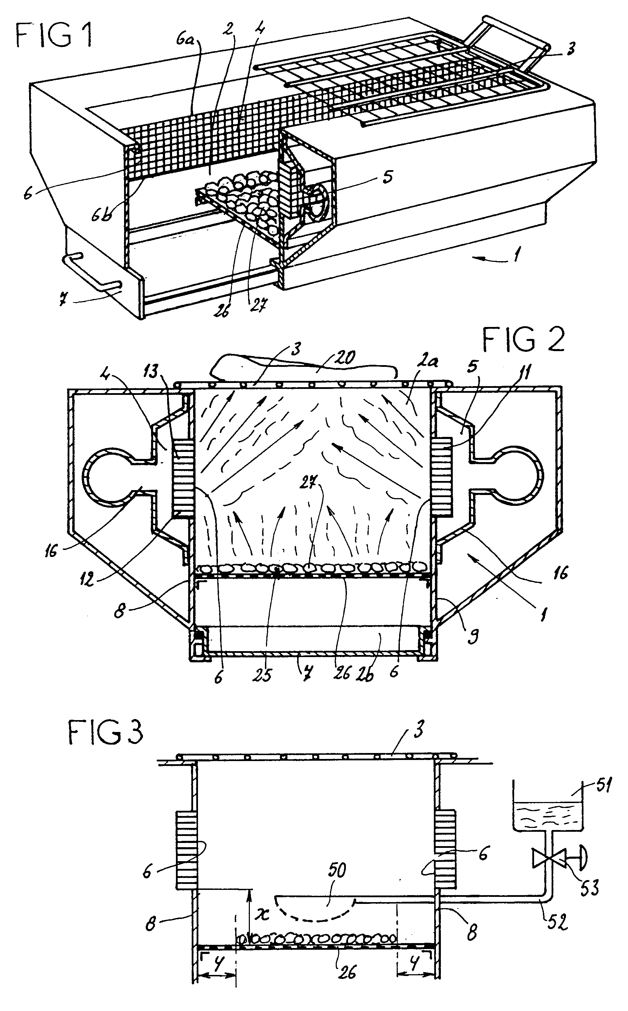

Conformément aux figures 1 et 2, un appareil de cuisson selon l'invention, du type gril à gaz, comprend :
- un châssis 1, constituant l'ossature de l'appareil, constitué dans le cas présent par l'assemblage de différentes cuves qui ne seront pas décrites plus en détail ; ce châssis est agencé pour délimiter ou déterminer un puits 2 de cuisson, présentant une section transversale rectangulaire, largement ouvert (2a) selon toute sa section à sa partie supérieure, et délimité pour l'essentiel par deux parois verticales et principales 8 et 9 selon sa longueur, en vis-à-vis ;
- une grille de cuisson 3, transversale, occupant principalement l'ouverture supérieure 2a du puits ;
- deux brûleurs 4 et 5 à gaz, identiques, supportés par le châssis, disposés sur chacun des deux côtés longitudinaux du puits 2 de cuisson, présentant chacun une surface rayonnante 6 émettant des rayons infra-rouges, et perméable aux fumées de combustion ; les surfaces rayonnantes 6 des deux brûleurs 4 et 5 respectivement sont adjacentes au puits de combustion 2, et conformées selon la surface intérieure correspondante de ce dernier, dans le cas présent sous la forme d'une surface verticale, coplanaire respectivement avec les parois verticales 8 et 9 ; éventuellement la surface rayonnante 6 des deux brûleurs 4 et 5 à gaz peut être légèrement inclinée vers le haut, c'est à dire en direction de la grille de cuisson 3.
- un récipient de recueil 7, monté sur le châssis 1, transversalement dans l'ouverture inférieure 2b du puits 2 ;
- un fond 25 fermant le puits de cuisson 2 à sa partie inférieure, ayant conjointement, selon pratiquement toute sa surface, un caractère réfractaire vis-à-vis des températures développées en fonctionnement par les brûleurs 4, 5 radiants, des propriétés d'isolation thermique du récipient de recueil 7 vis-à-vis de la surface rayonnante des brûleurs 4, 5, et une perméabilité relative vis-à-vis des liquides s'écoulant vers le récipient 7 ; ce fond est situé au-dessous des surfaces rayonnantes 6, en vis-à-vis de la grille de cuisson 3, et au-dessus du récipient de recueil 7 ; le fond 25 comprend une grille de support sur laquelle reposent des éléments discrets 27 d'un matériau du type pouzzolane ou pierre de lave.

Il résulte de la description précédente que le fond 25 présente une surface apparente adaptée à celle de la grille de cuisson, en vis-à-vis de cette dernière, et sans obstacle apparent formant écran dans le puits de cuisson 2, entre le fond 25 et la grille transversale 3.

Comme le montre la figure 2, chaque brûleur à gaz 4 ou 5, radiant, comprend une pièce 12 sous la forme d'un bandeau rectangulaire, dont l'épaisseur est beaucoup plus faible que ses autres dimensions, en céramique réfractaire, traversée par une multiplicité de trous 13 de passage du mélange gaz combustible-air comburant à brûler, et dont la face aval constitue la surface rayonnante 6 décrite précédemment. Chacune des pièces 11 et 12 est fixée de manière étanche dans une ouverture adaptée, ménagée dans une paroi principale verticale 8 ou 9. En correspondance avec la face amont de chaque pièce 12 est rapportée une enveloppe 16 permettant de former une chambre de distribution du mélange air comburant/gaz combustible à brûler, arrivant par un conduit non représenté, et ceci à partir d'une source de gaz combustible également non représentée.

Conformément à la figure 1, chaque surface rayonnante 6 est disposée dans la puits de cuisson 2, entre la grille de cuisson 3 et le fond 25.

Comme le montre la figure 2, le corps des deux brûleurs 4 et 5 est disposé derrière les deux parois principales et verticales 8 et 9 du puits 2 respectivement ; et les deux surfaces rayonnantes 6 en vis-à-vis ayant une forme rectangulaire, et donc une extension transversale par rapport à la hauteur, appartenant aux deux brûleurs 4 et 5 respectivement, sont disposées au même niveau, l'une en face de l'autre.

En fonctionnement, comme représenté à la figure 2, la grille de cuisson reçoit un rayonnement infra-rouge des deux surfaces rayonnantes 6, représenté par des flèches avec traits droits. Et les fumées de combustion, dont la trajectoire est représentée par un trait irrégulier, après avoir été éjectées du brûleur avec une vitesse résiduelle, montent lentement vers la grille de cuisson 3. Un rayonnement infra-rouge et de la chaleur par convection sont également restitués de manière résiduelle par le fond 25 en direction de la grille de cuisson. La conjonction de ces fumées de combustion, de la convection, et du rayonnement infra-rouge permet d'obtenir sur la grille de cuisson, une température modérée de l'ordre de 250 à 300° C, avec une bonne répartition surfacique de la chaleur, ce qui contribue à une cuisson saine et savoureuse de la pièce alimentaire 20, par exemple un morceau de viande, à griller.

Conformément à la figure 3, en fonctionnement, la température du fond, et a fortiori dans le récipient de recueil 7 est comprise préférentiellement entre 100°C et 250°C, en disposant ce fond 25, en hauteur, à une distance x de la bordure inférieure 6b de la surface rayonnante 6, et/ou à une distance y du plan vertical passant par la surface rayonnante 6, x et y étant choisis de manière appropriée, par exemple par des essais de routine.

Périodiquement, il convient de nettoyer le fond 25 du puits de cuisson, de manière à pyrolyser les graisses déposées dans et sur ledit fond. Pour ce faire, deux méthodes peuvent être utilisées :
- soit recouvrir l'appareil de cuisson d'un couvercle, et faire fonctionner l'appareil à la puissance maximum des brûleurs à gaz radiants,
- soit remonter le fond 25, par tout dispositif approprié, à mi-hauteur des brûleurs 4 et 5, et faire fonctionner ces derniers à pleine puissance.

Ce nettoyage sera arrêté, lorsqu'il ne se dégagera plus de fumées.

Conformément à la figure 3, un appareil de cuisson selon l'invention peut être pourvu d'un moyen d'aspersion d'eau divisée au-dessus du fond 25, comprenant un récipient 51 d'eau, extérieur au châssis 1, une conduite 52 contrôlée par un robinet 53, amenant l'eau du récipient à un dispositif 50 de distribution d'eau, situé au dessus du fond 25, dans le puits 2 de cuisson.

Une telle disposition complémentaire permet de cuire la pièce 20, au moins en partie, voire en totalité, à la vapeur, par vaporisation d'eau au contact du fond 25, puis condensation de l'eau vaporisée, montant dans le puits 2, au contact et au sein de la pièce 20, à cuire. On peut obtenir ainsi une cuisson à la fois plus rapide, et plus moelleuse.

## Revendications

1. Appareil de cuisson, notamment du type gril à gaz, comprenant :
- un châssis (1) délimitant un puits (2) de cuisson,
- au moins un brûleur (4,5) à gaz radiant supporté par le châssis (1) sur le côté du puits de cuisson, présentant une surface rayonnante (6) émettant des infra-rouges, et perméable aux fumées de combustion, adjacente au puits de combustion (2), et dont l'orientation par rapport à ce dernier présente une composante verticale ;
- un récipient de recueil (7), monté sur le châssis (1) transversalement dans l'ouverture inférieure (2b) du puits,
- un fond (25) fermant le puits (2) de cuisson, situé au-dessous de la surface rayonnante (6), et au-dessus du récipient de recueil (7), ledit fond ayant conjointement, selon la majeure partie de sa surface, un caractère réfractaire vis-à-vis des températures développées en fonctionnement par le brûleur à gaz radiant (4,5), des propriétés d'isolation thermique du récipient de recueil (7), vis-à-vis de la surface rayonnante (6) du brûleur (4,5) à gaz radiant, et une perméabilité relative vis-à-vis des liquides s'écoulant vers le récipient de recueil (7) **caractérisé en ce que**, en combinaison, d'une part le puits (2) de cuisson présente une ouverture supérieure (2a) occupée principalement par une grille de cuisson (3) transversale, et d'autre part le fond (25) présente une surface apparente adaptée à celle de la grille de cuisson, en vis-à-vis de cette dernière, et sans obstacle important formant écran dans le puits de cuisson, entre ledit fond et ladite grille de cuisson.

2. Appareil selon la revendication 1, caractérisé en ce que le fond (25) présente également des propriétés d'accumulation de chaleur.

3. Appareil selon la revendication 2, caractérisé en ce que le fond (25) comprend une grille de support (26), sur laquelle reposent des éléments discrets (27) d'un matériau réfractaire, isolant thermique, et pouvant accumuler de la chaleur, notamment d'un matériau du type pierre de lave ou pouzzolane.

4. Appareil selon la revendication 1, caractérisé en ce que le fond (25) est disposé en hauteur à une distance (x) de la bordure inférieure (6b) de la surface rayonnante (6), et/ou à une distance (y) du plan vertical passant par la surface rayonnante (6), de façon à ce qu'en fonctionnement la température dudit fond (25) soit comprise entre 100 et 400°C, et préférentiellement entre 100 et 250°C.

5. Appareil selon la revendication 1, caractérisé en ce que le brûleur comporte un dispositif (50) de distribution d'eau au dessus du fond.

## Claims

1. A cooking appliance, especially of the gas grill type, comprising:
- a body (1) delimiting a cooking pit (2),
- at least one radiant gas burner (4,5) supported by the body (1) on the side of the cooking pit, exhibiting a radiant surface (6) emitting infrared radiation, and permeable to the combustion smoke, adjacent to the cooking pit (2), and whose orientation with respect to the latter has a vertical component;
- a collecting receptacle (7) mounted on the body transversely in the lower opening (2b) of the pit,
- a bottom (25) closing the cooking pit (2) situated below the radiant surface (6) and above the collecting receptacle (7), said bottom having simultaneously, over the most part of its surface, a refractory nature toward the temperatures developed in operation by the radiant gas burner (4,5), properties of thermal insulation of the collecting receptacle (7) with respect to the radiant surface (6) of the radiant gas burner (4,5), and relative permeability with respect to the liquids flowing toward the collecting receptacle (7), characterized in that, in combination, on the one hand the cooking pit (2) has an upper opening (2a) occupied mainly by a transverse cooking grid (3) and, on the other hand, the bottom (25) has an apparent surface which matches that of the cooking grid, and faces the latter, without any substantial obstacle forming a barrier in the cooking pit between said bottom and said cooking grid.

2. The appliance as claimed in claim 1, characterized in that the bottom (25) also exhibits heat-accumulation properties.

3. The appliance as claimed in claim 2, characterized in that the bottom (25) comprises a support grid (26) on which there rest discrete elements (27) made of a refractory heat-insulating material which can accumulate heat, especially made of a material of the lava stone or pouzzolane type.

4. The appliance as claimed in claim 1, characterized in that the bottom (25) is located heightwise at a distance (x) from the lower edge (6b) of the radiant surface (6) and/or at a distance (y) from the vertical plane passing through the radiant surface (6), so that in operation the temperature of said bottom (25) lies between 100 and 400° C, and preferably between 100 and 250° C.

5. The appliance as claimed in claim 1, characterized in that the burner includes a device (50) for distributing water above the bottom.

## Patentansprüche

1. Bratgerät, insbesondere in der Art eines Gas-Grills mit:
- einem Rahmen (1), der einen Bratraum (2) begrenzt,
- zumindest einem Strahlungs-Gasbrenner (4, 5), der von dem Rahmen (1) seitlich des Bratraumes gehalten wird, und der eine Infrarot-Strahlung emittierende, für Verbrennungsdämpfe durchlässige Strahlerfläche (6) aufweist, die dem Heizraum (2) benachbart ist, und deren Orientierung relativ zu diesem eine vertikale Komponente aufweist;
- einem Auffangbehälter (7), der an dem Rahmen (1) querverlaufend in der unteren Öffnung (2b) des Raumes angebracht ist,
- einem Boden (25), der den Bratraum (2) abschließt und sich unter der Strahlerfläche (6) und über dem Auffangbehälter (7) befindet, wobei der Boden über den Großteil seiner Oberfläche gleichsam eine Hitzebeständigkeit gegenüber den beim Betrieb des Strahlungs Gasbrenners (4, 5) entwickelten Temperaturen, Wärmeisolierungseigenschaften zur Isolierung des Auffangbehälters (7) gegenüber der Strahlerfläche (6) des Strahlungs-Gasbrenners (4, 5) und eine relative Durchlässigkeit gegenüber Flüssigkeiten, die in den Auffangbehälter (7) ablaufen, besitzt, dadurch gekennzeichnet, daß der Bratraum (2) ei nerseits eine obere Öffnung (2a) aufweist, die hauptsächlich mit einem querverlaufenden Bratrost (3) belegt ist, und daß in Kombination damit dei Boden (25) andererseits eine an die Oberfläche des Bratrostes angepaßte und diesem gegenüberliegende sichtbare Oberfläche aufweist, die in dem Bratraum zwischen dem Boden und dem Bratrost im wesentlichen hindernisfrei einen Schirm bildet.

2. Gerät nach Anspruch 1, dadurch gekennzeichnet, daß der Boden (25) auch Wärmespeichereigenschaften besitzt.

3. Gerät nach Anspruch 2, dadurch gekennzeichnet, daß der Boden (25) einen Tragrost (26) umfaßt, auf dem einzelne Elemente (27) aus einem hitzebeständigen, wärmeisolierenden Material liegen, das die Wärme speichern kann, insbesondere aus einem Material von der Art Lavagestein oder Puzzolan.

4. Gerät nach Anspruch 1, dadurch gekennzeichnet, daß der Boden (25) bezüglich der Höhe in einem Abstand (x) von dem unteren Rand (6b) der Strahlerfläche (6) und/oder in einem Abstand (y) von der durch die Strahlerfläche (6) gehenden vertikalen Ebene derart angeordnet ist, daß die Temperatur des Bodens (25) im Betrieb zwischen 100 und 400°C, vorzugsweise zwischen 100 und 250°C liegt.

5. Gerät nach Anspruch 1, dadurch gekennzeichnet, daß der Brenner eine Vorrichtung (50) zur Abgabe von Wasser über dem Boden aufweist.
